# EUROPEAN PATENT APPLICATION

(11) **EP 4 131 562 A1**
(43) Date of publication of application: **08.02.2023**
(21) Application number: 20928397.7
(22) Date of filing: 31.03.2020
(51) Int. Cl.: H01M 10/44

(54) **METHOD FOR IMPROVING CYCLE PERFORMANCE OF BATTERY AND ELECTRONIC DEVICE**

(71) Applicant: Ningde Amperex Technology Ltd., Ningde City, Fujian 352100 (CN)
(72) Inventor: HE, Jun, Ningde City, Fujian Province, 352100 (CN); CUI, Hui, Ningde City, Fujian Province, 352100 (CN); ZHENG, Qiang, Ningde City, Fujian Province, 352100 (CN); FANG, Zhanzhao, Ningde City, Fujian Province, 352100 (CN)
(74) Representative: Icosa
(86) International application number: PCT/CN2020/082255
(87) International publication number: WO 2021/195908

(57) **Abstract**

This application provides a method for enhancing battery cycle performance. The method is applied in a battery and includes: charging, at a first stage, the battery at a first-stage current until reaching a first-stage voltage; and charging, at a second stage, the battery at a second-stage current until reaching a second-stage voltage. The second-stage voltage is greater than the first-stage voltage, and the second-stage current is less than the first-stage current. The battery includes an electrolytic solution containing an organic solvent. The organic solvent includes a chain carboxylate compound. A weight percent of the chain carboxylate compound in the organic solvent is 10% to 70%. This application further provides an electronic device. The method according to this application can enhance high-temperature cycle and storage performance of the battery.

## Description

### TECHNICAL FIELD

This application relates to the technical field of batteries, and in particular, to a method for enhancing battery cycle performance and an electronic device.

### BACKGROUND

With the ongoing iterative development of consumer lithium-ion batteries in recent years, higher requirements are imposed on a charging speed of batteries in the market. As kinetic performance of an electrolytic solution keeps increasing, the electrolytic solution containing a carboxylate solvent is characterized by low viscosity and high kinetics, and can effectively increase the charging speed of lithium-ion batteries and effectively improve cycle performance under low-temperature conditions. However, the carboxylate solvent is active and prone to side reactions between a positive electrode and a negative electrode of a battery. Especially, under high-temperature conditions, the carboxylate solvent is prone to side reactions of gas production, causes a battery cell to expand and deform, and impairs the high-temperature cycle and storage performance of the battery.

### SUMMARY

In view of the situation above, it is necessary to provide a method for enhancing battery cycle performance and an electronic device, so that the method and electronic device can enhance high-temperature cycle and storage performance of a battery.

An embodiment of this application provides a method for enhancing battery cycle performance. The method is applied in a battery and includes: charging, at a first stage, the battery at a first-stage current until reaching a first-stage voltage; and charging, at a second stage, the battery at a second-stage current until reaching a second-stage voltage. The second-stage voltage is greater than the first-stage voltage, and the second-stage current is less than the first-stage current. The battery includes an electrolytic solution containing an organic solvent. The organic solvent includes a chain carboxylate compound. A weight percent of the chain carboxylate compound in the organic solvent is 10% to 70%.

According to some embodiments of this application, the chain carboxylate compound is at least one selected from compounds represented by Formula I:

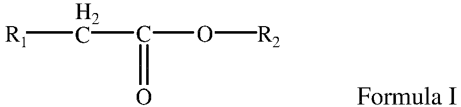

In Formula I, R₁ is selected from a hydrogen atom, a halogen atom, a hydroxyl, a C₁ to C₂₀ alkyl, a C₁ to C₂₀ alkoxyl, a C₁ to C₂₀ alkenyl, a C₆ to C₃₀ aryl, or a C₆ to C₃₀ aryloxy; and R₂ is selected from a hydrogen atom, a halogen atom, a C₁ to C₂₀ alkyl, a C₁ to C₂₀ alkenyl, or a C₆ to C₃₀ aryl.

According to some embodiments of this application, the chain carboxylate compound is at least one selected from methyl formate, methyl acetate, ethyl formate, ethyl acetate, propyl acetate, ethyl propionate, methyl propionate, n-propyl propionate, isopropyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate.

According to some embodiments of this application, the electrolytic solution further includes a lithium salt, and the lithium salt is at least one selected from lithium hexafluorophosphate, lithium difluorophosphate, lithium tetrafluoroborate, lithium hexafluoroarsenate, lithium perchlorate, lithium bisfluorosulfonimide, lithium bis(trifluoromethanesulfonyl)imide, lithium bis(oxalato)borate, or lithium difluoro(oxalato)borate.

According to some embodiments of this application, the battery further includes a positive electrode plate, a negative electrode plate, and a separator disposed between the positive electrode plate and the negative electrode plate. The separator includes a porous substrate, a heat-resistant coating disposed on a surface of the porous substrate, and a polymer adhesive layer disposed on an outermost side of the separator. The polymer adhesive layer is disposed on a surface of the heat-resistant coating or on the surface of the porous substrate that is not coated with the heat-resistant coating. The polymer adhesive layer includes polymer particles. A number of packing layers of the polymer particles in the polymer adhesive layer does not exceed four.

According to some embodiments of this application, the polymer particles are at least one of polyvinylidene dichloride, poly(vinylidene fluoride-co-hexafluoropropylene), poly(styrene-co-butadiene), polyacrylonitrile, poly(butadiene-co-acrylonitrile), polyacrylic acid, polyacrylate, or poly(acrylate-co-styrene), or a copolymer of at least two of the foregoing polymer monomers. A diameter of the polymer particles is 0.2 µm to 2 µm.

According to some embodiments of this application, a percentage of a coverage area of the polymer adhesive layer on the porous substrate or the heat-resistant coating is 15% to 85%.

According to some embodiments of this application, an adhesive force between the separator and the positive electrode plate or negative electrode plate is greater than or equal to 3 N/m.

According to some embodiments of this application, at the second stage, the battery is charged in a first charging manner or a second charging manner until reaching the second-stage voltage. The first charging manner includes K sequential sub-stages, where K is an integer greater than or equal to 2. The K sub-stages are defined as an i^{th} sub-stage, where i = 1, 2,..., K, respectively. At the i^{th} sub-stage, the battery is charged at an i^{th} current or an i^{th} voltage or an i^{th} power. At an (i+1)^{th} sub-stage, the battery is charged at an (i+1)^{th} current or an (i+1)^{th} voltage or an (i+1)^{th} power. A charge current at the (i+1)^{th} sub-stage is less than or equal to the charge current at the i^{th} sub-stage, or the (i+1)^{th} voltage is greater than or equal to the i^{th} voltage, or the (i+1)^{th} power is less than or equal to the i^{th} power. The second charging manner includes D sequential charging sub-stages, where D is an integer greater than or equal to 2. The D charging sub-stages are defined as a j^{th} charging sub-stage, where j = 1, 2,..., D, respectively. Each j^{th} charging sub-stage includes a j^{th} earlier charging sub-stage and a j^{th} later charging sub-stage. At one of the j^{th} earlier charging sub-stage or the j^{th} later charging sub-stage, the battery is not charged or is charged or discharged at a j^{th} earlier charge sub-current for a duration of Tj 1. At the other of the j^{th} earlier charging sub-stage or the j^{th} later charging sub-stage, the battery is charged at a j^{th} later charge sub-current for a duration of Tj2. An absolute value of the j^{th} earlier charge sub-current is less than an absolute value of the j^{th} later charge sub-current.

According to some embodiments of this application, an average value of the charge current at the j^{th} charging sub-stage is less than the charge current at the first stage, and an average value of the charge current at the (j+1)^{th} charging sub-stage is less than or equal to the charge current at the j^{th} charging sub-stage.

According to some embodiments of this application, at the first stage, the battery is charged in a third charging manner until reaching the first-stage voltage, and the third charging manner adopts the first charging manner or the second charging manner.

According to some embodiments of this application, when the third charging manner adopts the first charging manner, the number K of charging sub-stages is identical between the two manners; or, when the third charging manner adopts the second charging manner, the number D of charging sub-stages is identical between the two manners.

According to some embodiments of this application, the first-stage voltage is equal to a charge voltage limit of the battery, and the second-stage voltage is less than an oxidative decomposition voltage of the electrolytic solution in the battery.

According to some embodiments of this application, the second-stage voltage is less than or equal to the first-stage voltage plus 500 millivolts.

According to some embodiments of this application, the method further includes: charging, at a third stage, the battery at a constant voltage equal to the second-stage voltage.

An embodiment of this application further provides an electronic device, including a battery and a battery management unit. The battery includes an electrolytic solution containing an organic solvent. The organic solvent includes a chain carboxylate compound. A weight percent of the chain carboxylate compound in the organic solvent is 10% to 70%. The battery management unit is configured to execute any one of the methods described above.

In the embodiments of this application, the electrolytic solution containing a high content of carboxylate is combined with a specified charging manner (increasing a charge voltage limit of the battery) to increase the charging speed of the battery, significantly shorten a duration for charging the battery to a fully charged state, and also shorten a time during which a positive electrode of the battery stays under a high voltage, and reduce the time during which a side reaction occurs between the positive electrode and the electrolytic solution under the high voltage, thereby improving the cycle performance of the battery. In addition, the use of a high-adhesion separator can further improve the cycle performance of the battery.

### BRIEF DESCRIPTION OF DRAWINGS

FIG. 1 is a schematic diagram of an electronic device according to an embodiment of this application;
FIG. 2 is a flowchart of a method for enhancing battery cycle performance according to an embodiment of this application;
FIG. 3 is a first specific embodiment of the method for enhancing battery cycle performance shown in FIG. 1;
FIG. 4 is a schematic diagram of time-varying current and voltage of a battery during charging according to a first embodiment of this application;
FIG. 5 is a schematic diagram of time-varying current and voltage of a battery during charging according to a second embodiment of this application;
FIG. 6 is a schematic diagram of time-varying power and voltage at a first stage and time-varying current and voltage at a second stage according to an embodiment of this application;
FIG. 7 is a schematic diagram of time-varying current and voltage of a battery during charging according to a third embodiment of this application;
FIG. 8 is a schematic diagram of time-varying current and voltage of a battery during charging according to a fourth embodiment of this application;
FIG. 9 is a second specific embodiment of the method for enhancing battery cycle performance shown in FIG. 1;
FIG. 10 is a third specific embodiment of the method for enhancing battery cycle performance shown in FIG. 1; and
FIG. 11 is a fourth specific embodiment of the method for enhancing battery cycle performance shown in FIG. 1.
FIG. 12 shows changes of a potential versus Li/Li⁺ of a positive electrode of a battery charged in a conventional charging manner in comparison with a new charging manner disclosed in a method for enhancing battery cycle performance;
FIG. 13 shows a conductivity comparison chart of electrolytic solutions with a solvent containing different weight percentages of carboxylate;
FIG. 14 is a schematic diagram of full-battery impedance; and
FIG. 15 is a schematic diagram of adhesive force comparison between different separators.

Reference numerals of main components:

| | |
|---|---|
| Electronic device | 1 |
| Battery | 10 |
| Control unit | 11 |
| Battery management unit | 12 |

### DETAILED DESCRIPTION OF EMBODIMENTS

The following describes the technical solutions in the embodiments of this application clearly and thoroughly with reference to the drawings herein. Evidently, the described embodiments are merely a part of but not all of the embodiments of this application.

All other embodiments derived by a person of ordinary skill in the art based on the embodiments of the present invention without making any creative effort fall within the protection scope of the present invention.

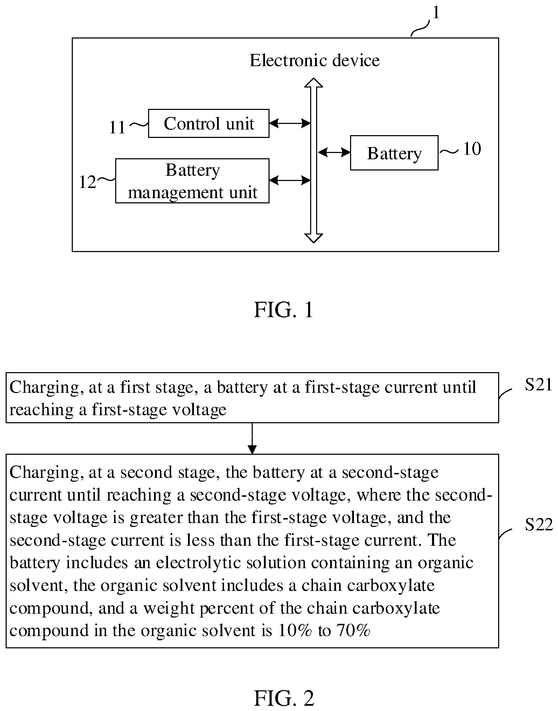

Referring to FIG. 1, FIG. 1 is a schematic diagram of an electronic device according to an embodiment of this application. The electronic device 1 includes a battery 10, a control unit 11, and a battery management unit 12. The battery 10, the control unit 11, and the battery management unit 12 may be interconnected by a bus or directly. The battery 10 includes at least one cell. The battery 10 can be repeatedly charged in a rechargeable manner. For example, the battery is a lithium-ion battery. The control unit 11 can control the battery management unit 12 to execute the method for enhancing battery cycle performance. The control unit 11 may be a microcontroller unit (Microcontroller, MCU), a processor (Processor), an application-specific integrated circuit (Application-specific integrated circuit, ASIC), or the like, and can control the battery management unit 12 to execute the method for enhancing battery cycle performance.

It needs to be noted that FIG. 1 describes merely an example of the electronic device 1. In other embodiments, the electronic device 1 may include more or fewer components, or may be equipped with different components. The electronic device 1 may be an electric motorcycle, an electric bicycle, an electric vehicle, a mobile phone, a tablet computer, a personal digital assistant, a personal computer, or any other rechargeable devices as appropriate.

The electronic device 1 may further include other components that are not shown though, such as a wireless fidelity (Wireless Fidelity, WiFi) unit, a Bluetooth unit, a speaker, details of which are omitted here.

Referring to FIG. 2, FIG. 2 is a flowchart of a method for enhancing battery cycle performance according to an embodiment of this application. The method for enhancing battery cycle performance is applied to a battery, and includes the following steps:

Step S21: Charging, at a first stage, the battery at a first-stage current until reaching a first-stage voltage; and

Step S22: Charging, at a second stage, the battery at a second-stage current until reaching a second-stage voltage, where the second-stage voltage is greater than the first-stage voltage, and the second-stage current is less than the first-stage current.

The battery includes an electrolytic solution containing an organic solvent, the organic solvent includes a chain carboxylate compound, and a weight percent of the chain carboxylate compound in the organic solvent is 10% to 70%.

In this embodiment, the chain carboxylate compound is at least one selected from compounds represented by Formula I:

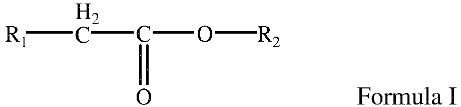

In Formula I, R₁ is selected from a hydrogen atom, a halogen atom, a hydroxyl, a C₁ to C₂₀ alkyl, a C₁ to C₂₀ alkoxyl, a C₁ to C₂₀ alkenyl, a C₆ to C₃₀ aryl, or a C₆ to C₃₀ aryloxy; and R₂ is selected from a hydrogen atom, a halogen atom, a C₁ to C₂₀ alkyl, a C₁ to C₂₀ alkenyl, or a C₆ to C₃₀ aryl.

As an example, the chain carboxylate compound may be one selected from methyl formate, methyl acetate, ethyl formate, ethyl acetate, propyl acetate, ethyl propionate, methyl propionate, n-propyl propionate, isopropyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate.

Especially, the chain carboxylate compound is at least one selected from methyl formate, ethyl acetate, propyl acetate, methyl propionate, ethyl propionate, propyl propionate, or ethyl butyrate.

Understandably, the battery may further include a lithium salt and an additive. The lithium salt may be at least one of an inorganic lithium salt or an organic lithium salt. Preferably, the lithium salt may be at least one of lithium hexafluorophosphate (LiPF₆), lithium difluorophosphate (LiPO₂F₂), lithium tetrafluoroborate (LiBF₄), lithium hexafluoroarsenate, lithium perchlorate, lithium bisfluorosulfonimide (LiFSI), lithium bis(trifluoromethanesulfonyl)imide (LiTFSI), lithium bis(oxalato)borate LiB(C₂O₄)₂ (LiBOB for short), or lithium difluoro(oxalato)borate LiBF₂(C₂O₄) (LiDFOB for short). Further preferably, the lithium salt is lithium hexafluorophosphate (LiPF₆). The additive is known by a person skilled in the art to enhance battery performance, for example, an SEI (solid electrolyte interface) film-forming additive, a flame retardant additive, an anti-overcharge additive, and a conductive additive.

In this embodiment, the battery further includes a positive electrode plate, a negative electrode plate, and a separator disposed between the positive electrode plate and the negative electrode plate. The separator includes a porous substrate, a heat-resistant coating disposed on a surface of the porous substrate, and a polymer adhesive layer disposed on an outermost side of the separator. The polymer adhesive layer is disposed on a surface of the heat-resistant coating or on the surface of the porous substrate without the heat-resistant coating. The polymer adhesive layer includes polymer particles. A number of packing layers of the polymer particles in the polymer adhesive layer does not exceed four. Preferably, the number of packing layers is less than or equal to 2.

In this embodiment, a percentage of a coverage area of the polymer adhesive layer on the porous substrate or the heat-resistant coating is 15% to 85%.

In the prior art, the separator of a battery is usually made of a polyolefin material. Such a separator adhesive layer is a relatively thick, and produces a relatively low adhesive force, being unable to meet requirements of a lithium-ion battery on electrical performance and energy density. Therefore, this application adopts a high-adhesion separator. The high-adhesion separator includes a porous substrate, a heat-resistant coating applied on at least one side of the porous substrate, and a polymer adhesive layer on an outermost surface. Specifically, the polymer adhesive layer is applied on a surface of the heat-resistant coating or on the surface of the porous substrate that is not coated with the heat-resistant coating. The percentage of the coverage area of the polymer adhesive layer on the porous substrate or the heat-resistant coating is 15% to 85%, and preferably, 30% to 70%.

In this embodiment, the polymer adhesive layer includes polymer particles. The polymer particles are at least one of polyvinylidene dichloride, poly(vinylidene fluoride-co-hexafluoropropylene), poly(styrene-co-butadiene), polyacrylonitrile, poly(butadiene-co-acrylonitrile), polyacrylic acid, polyacrylate, or poly(acrylate-co-styrene), or a copolymer of at least two of the foregoing polymer monomers. The polymer particles are homogeneous polymer microspheres or core-shell microspheres. A particle size of the polymer particles is 0.2 µm to 2 µm, and preferably, 0.3 µm to 1 µm. A swelling degree of the polymer particles swollen in the electrolytic solution is 20% to 100%.

In an embodiment, when the polymer particles are core-shell microspheres, an outer shell of the core-shell microspheres is a highly adhesive polymer (the adhesive force between the outer shell and the positive or negative electrode plate is not less than 3 N/m). That is, the adhesive force between the separator and the positive or electrode plate is greater than or equal to 3 N/m. An inner core of the core-shell microspheres is a polymer that is in affinity with the electrolytic solution (the swelling degree of the polymer swollen in the electrolytic solution is greater than 100%).

It needs to be noted that the polymer adhesive layer further includes an auxiliary binder and a dispersant that are configured to be coated on or bonded to the porous substrate or the heat-resistant coating. The porous substrate is made of polyethylene, polypropylene, polyethylene terephthalate (PET), cellulose, or polyimide.

In the battery containing the electrolytic solution described above, the electrolytic solution containing a high content of carboxylate is highly conductive, and can improve kinetics of the battery and cause the battery to meet requirements of charging at a high rate. The high-adhesion separator in use can shorten the distance between the electrode plate and the separator in the lithium-ion battery. In addition, the electrolytic solution at the interface is crowded out to some extent, thereby suppressing a growth speed of by-products in a high-temperature environment, and enhancing the high-temperature cycle capacity retention rate.

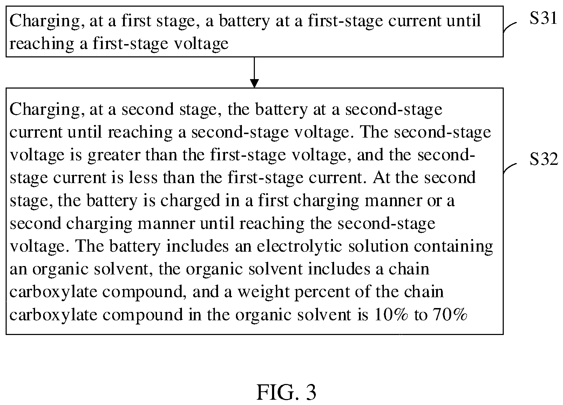

Referring to FIG. 3, FIG. 3 is a first specific embodiment of the method for enhancing battery cycle performance shown in FIG. 2. The method includes the following steps.

Step S31: Charging, at a first stage, the battery at a first-stage current until reaching a first-stage voltage.

In this embodiment, the first-stage current is a constant current, and specifically, a constant current at which the battery is charged at the start of an existing charging process. Alternatively, the first-stage current may be a varying current. For example, at the first stage, the battery is charged at a constant voltage, and therefore, the charge current corresponding to the constant voltage (that is, the first-stage current) is variable as long as the battery can be charged to reach the first-stage voltage by using the first-stage current. The first-stage voltage is equal to a charge voltage limit of the battery (which may be understood as a well-known charge voltage limit).

Step S32: Charging, at a second stage, the battery at a second-stage current until reaching a second-stage voltage. The second-stage voltage is greater than the first-stage voltage, and the second-stage current is less than the first-stage current. At the second stage, the battery is charged in a first charging manner or a second charging manner until reaching the second-stage voltage.

The battery includes an electrolytic solution containing an organic solvent, the organic solvent includes a chain carboxylate compound, and a weight percent of the chain carboxylate compound in the organic solvent is 10% to 70%.

The first charging manner includes K sequential charging sub-stages, where K is an integer greater than or equal to 2. The K charging sub-stages are defined as an i^{th} charging sub-stage, where i = 1, 2,..., K, respectively. At the i^{th} charging sub-stage, the battery is charged at an i^{th} current or an i^{th} voltage or an i^{th} power. At an (i+1)^{th} charging sub-stage, the battery is charged at an (i+1)^{th} current or an (i+1)^{th} voltage or an (i+1)^{th} power. A charge current at the (i+1)^{th} charging sub-stage is less than or equal to the charge current at the i^{th} charging sub-stage, or the (i+1)^{th} voltage is greater than or equal to the i^{th} voltage, or the (i+1)^{th} power is less than or equal to the i^{th} power.

In this embodiment, the (i+1)^{th} voltage is greater than or equal to the i^{th} voltage, and the (i+1)^{th} power is less than or equal to the i^{th} power.

The second charging manner includes D sequential charging sub-stages, where D is an integer greater than or equal to 2, the D charging sub-stages are defined as a j^{th} charging sub-stage, where j = 1, 2,..., D, respectively, each j^{th} charging sub-stage includes a j^{th} earlier charging sub-stage and a j^{th} later charging sub-stage; at one of the j^{th} earlier charging sub-stage or the j^{th} later charging sub-stage, the battery is not charged or is charged or discharged at a j^{th} earlier charge sub-current for a duration of Tj 1; at the other of the j^{th} earlier charging sub-stage or the j^{th} later charging sub-stage, the battery is charged at a j^{th} later charge sub-current for a duration of Tj2; and an absolute value of the j^{th} earlier charge sub-current is less than an absolute value of the j^{th} later charge sub-current.

In this embodiment, the average of the charge current at the (j+1)^{th} charging sub-stage is less than or equal to the charge current at the j^{th} charging sub-stage, and, when the third charging manner adopts the second charging manner, the average of the charge current at the j^{th} charging sub-stage is less than the charge current in the first charging manner or the second charging manner.

It needs to be noted that the first-stage voltage is equal to a charge voltage limit of the battery.

The charge current at the 1^{st} charging sub-stage of the second stage is less than the first-stage current, and the charge current at the (i+1)^{th} charging sub-stage is less than or equal to the charge current at the i^{th} charging sub-stage, thereby making a negative electrode potential of the battery be not lower than a lithium plating potential. The lithium plating potential may be obtained by the following test. For the battery in this embodiment, another three-electrode battery of the same specifications is made. Compared with the battery in this embodiment, the three-electrode battery includes an additional electrode, and specifically, includes three electrodes: negative electrode, positive electrode, and reference electrode. The material of the reference electrode is lithium, and the three-electrode battery is configured for testing to obtain the lithium plating potential of the negative electrode of the battery in this embodiment.

The specific test method for the lithium plating potential of the negative electrode is: making a plurality of three-electrode batteries, charging and discharging the three-electrode batteries at charge currents of different rates (for example, 1C, 2C, and 3C) respectively for a plurality of cycles (for example, 10 cycles), and detecting a potential difference between the negative electrode and the reference electrode in the charge-and-discharge process; subsequently, disassembling each three-electrode battery in a fully charged state, and checking whether lithium plating occurs on the negative electrodes of the three-electrode batteries charged at different rates (that is, checking whether metallic lithium is precipitated on the surface of the negative electrode); and determining a maximum C-rate corresponding to a three-electrode battery free from lithium plating, and using a minimum value of a potential difference between the negative electrode and the reference electrode obtained in a process of charging and discharging at such a C-rate as the lithium plating potential of the negative electrode. In addition, it needs to be noted that the charge current of a lithium battery is generally represented by a value relative to a rate of C, where C is a numerical value corresponding to the capacity of the lithium battery. The capacity of a lithium battery is generally expressed in Ah or mAh. For example, when the battery capacity is 1200 mAh, 1 C is 1200 mA, and 0.2 C is equal to 240 mA.

For another example, a plurality of three-electrode batteries are charged and discharged at charge currents of 1C, 2C, and 3C, respectively, for 10 cycles. As shown by the three-electrode batteries disassembled, the negative electrode of the batteries charged and discharged at a current of 1 C or 2 C is free from lithium plating, but the negative electrode of the batteries charged and discharged at a current of 3 C incurs lithium plating. Therefore, a minimum value of the potential difference between the negative electrode and the reference electrode obtained in a process of charging and discharging at a 2 C rate is the lithium plating potential of the negative electrode. In addition, the lithium plating potential of the positive electrode may also be tested in a similar manner, details of which are omitted here. As observed in the process of testing the lithium plating potential of the negative electrode, the negative electrode potential and positive electrode potential of the battery are further understood as follows: the negative electrode potential is a potential difference between the negative electrode and the reference electrode, that is, a potential versus Li/Li⁺ of the negative electrode; and the positive electrode potential is a potential difference between the positive electrode and the reference electrode, that is, a potential versus Li/Li⁺ of the positive electrode.

The second-stage voltage is less than an oxidative decomposition voltage of the electrolytic solution in the battery. The oxidative decomposition voltage of the electrolytic solution in the battery may be understood as follows: when the potential of the battery exceeds a potential threshold, irreversible reduction or oxidative decomposition reactions of the solvent molecules, additive molecules, and even impurity molecules in the electrolytic solution will occur on an interface between the electrode and the electrolytic solution. This phenomenon is referred to as electrolytic solution decomposition. The potential threshold is a reduction decomposition voltage and an oxidative decomposition voltage of the electrolytic solution in the battery. In this embodiment, the second-stage voltage is further less than or equal to the first-stage voltage plus 500 millivolts.

In the K^{th} charging sub-stage or the D^{th} charging sub-stage of the second stage, the battery is charged until the voltage reaches the second-stage voltage. At this time, a charge cut-off condition of the battery may be a cut-off voltage, a cut-off current, or a cut-off capacity. More specifically, in the K^{th} charging sub-stage or the D^{th} charging sub-stage, the charging of the battery stops and the charging is cut off when the charge current of the battery is equal to the cut-off current, or the reached charge voltage (that is, a voltage difference between the positive electrode and the negative electrode) is equal to the cut-off voltage, or a capacitance of the battery is equal to the cut-off capacity. For batteries of different specifications, the cut-off current, cut-off voltage, and cut-off capacity can be obtained by the test method of the three-electrode battery described above, and by observing that the positive electrode of the three-electrode battery is free from over-delithiation, so as to ensure that the capacitance of the battery is equivalent to the capacitance obtained in a conventional charging manner in the prior art, and to ensure that the positive electrode of the battery is free from over-delithiation.

In addition, it needs to be noted that: in this embodiment, the following values may be pre-stored in the battery or a processor 11: the first-stage current; the first-stage voltage; one of the i^{th} current, the i^{th} voltage, or the i^{th} power at the i^{th} charging sub-stage of the first stage; one of the i^{th} current, the i^{th} voltage, or the i^{th} power at the i^{th} charging sub-stage of the second stage; the second-stage voltage; and the cut-off condition. The processor 11 reads the pre-stored values to correctly control the charging system 10 to perform charging.

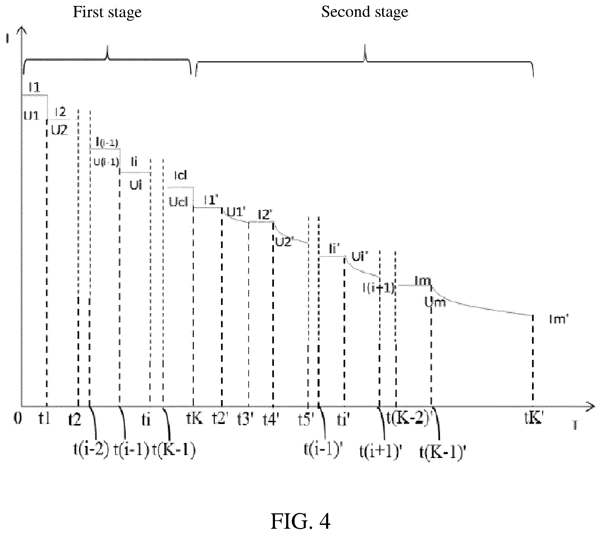

Referring to FIG. 4, at the first stage, the battery is charged in the first charging manner, the first charging manner includes K sequential charging sub-stages, and the K charging sub-stages are defined as an i^{th} charging sub-stage, where i = 1, 2,..., K, respectively; and, at the i^{th} charging sub-stage, the battery is charged at an i^{th} current. At the second stage, the battery is charged in the first charging manner, the first charging manner includes K sequential charging sub-stages, and the K charging sub-stages are defined as the i^{th} charging sub-stage, where i = 1, 2,..., K, respectively; at the i^{th} charging sub-stage, the battery is charged at the i^{th} current; at the (i+1)^{th} charging sub-stage, the battery is charged at an i^{th} voltage, and the charging process goes on alternately and cyclically in this way.

At the first stage, in a period between time 0 and t1, the battery is charged at a constant current of I1 until the voltage reaches U1; in a period between time t1 and t2, the battery is charged at a constant current of I2 until the voltage reaches U2; in a period between time t(i-2) and t(i-1), the battery is charged at a constant current of I(i-1) until the voltage reaches U(i-1); in a period between time t(i-1) to ti, the battery is charged at a constant current of Ii until the voltage reaches Ui; and, in a period between time t(K-1) and tK, the battery is charged at a constant current of Ic1 until the voltage reaches Uc1. A similar charging process is performed in a period between time t2 and t(i-2), and in a period between time ti and t(K-1), which is omitted from the drawing and not shown.

At the second stage, in a period between time t1' and t2', the battery is charged at a constant current of I1' until the voltage reaches U1'; in a period between time t2' and t3', the battery is charged at a constant voltage of U1', and the corresponding charge current in this period drops from I1' to 12'; in a period between time t3' and t4', the battery is charged at a constant current of I2' until the voltage reaches U2'; in a period between time t4' and t5', the battery is charged at a constant voltage of U2'; in a period between time t(i-1)' and ti', the battery is charged at a constant current of Ii' until the voltage reaches Ui'; in a period between time ti' and t(i+1)', the battery is charged at a constant voltage of Ui', and the corresponding charge current in this period drops from I1' to I(i+1)'; in a period between time t(K-2)' and t(K-1)', the battery is charged at a constant current of Im until the voltage reaches Um; and, in a period between time t(K-1)' and tK', the battery is charged at a constant voltage of Um, and the corresponding charge current in this period drops from Im to Im'. A similar charging process is performed in a period between time t5' and t(i-1)', and in a period between time t(i+1)' and t(K-2)', which is omitted from the drawing and not shown.

It needs to be noted that tK and t1' are the same time. At each of the K charging sub-stages of the first stage, the battery is charged at a constant charge current, I1 ≥ I2 ≥...≥ Ic1, and U1 ≤ U2 ≤...≤ Uc1. At each of the K charging sub-stages of the second stage, the battery is charged at a constant current and a constant voltage alternately, Ic1 ≥ I1' ≥ I2' ≥...≥ Im', and Uc1 ≤ U1' ≤ U2' ≤...≤ Um.

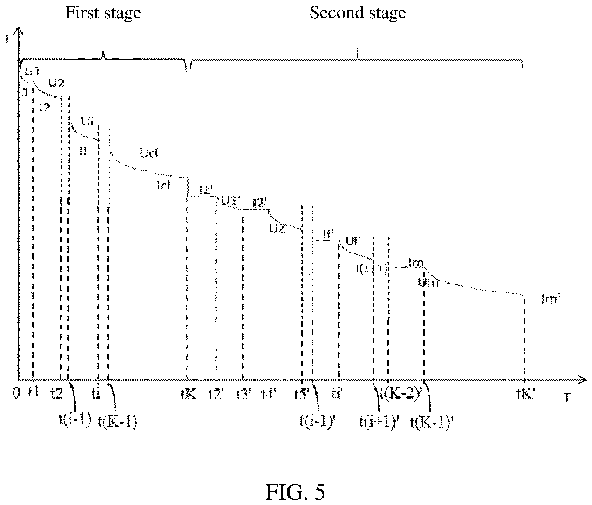

Referring to FIG. 5, at the first stage, the battery is charged in the first charging manner, the first charging manner includes K sequential charging sub-stages, and the K charging sub-stages are defined as an i^{th} charging sub-stage, where i = 1, 2,..., K, respectively; and, at the i^{th} charging sub-stage, the battery is charged at the i^{th} voltage. At the second stage, the battery is charged in the first charging manner, the first charging manner includes K sequential charging sub-stages, and the K charging sub-stages are defined as the i^{th} charging sub-stage, where i = 1, 2,..., K, respectively; at the i^{th} charging sub-stage, the battery is charged at the i^{th} current; at the (i+1)^{th} charging sub-stage, the battery is charged at an i^{th} voltage, and the charging process goes on alternately and cyclically in this way.

At the first stage, in a period between time 0 and t1, the battery is charged at a constant voltage of U1 until the current reaches I1; in a period between time t1 and t2, the battery is charged at a constant voltage of U2 until the current reaches I2; in a period between time t(i-1) and ti, the battery is charged at a constant voltage of Ui until the current reaches Ii; and, in a period between time t(K-1) and tK, the battery is charged at a constant voltage of Uc1 until the current reaches Ic1. A similar charging process is performed in a period between time t2 and t(i-1), and in a period between time ti and t(K-1), which is omitted from the drawing and not shown.

At the second stage, in a period between time t1' and t2', the battery is charged at a constant current of I1' until the voltage reaches U1'; in a period between time t2' and t3', the battery is charged at a constant voltage of U1', and the corresponding charge current in this period drops from I1' to I2'; in a period between time t3' and t4', the battery is charged at a constant current of I2' until the voltage reaches U2'; in a period between time t4' and t5', the battery is charged at a constant voltage of U2'; in a period between time t(i-1)' and ti', the battery is charged at a constant current of Ii' until the voltage reaches Ui'; in a period between time ti' and t(i+1)', the battery is charged at a constant voltage of Ui', and the corresponding charge current in this period drops from li' to I(i+1)'; in a period between time t(K-2)' and t(K-1)', the battery is charged at a constant current of Im until the voltage reaches Um; and, in a period between time t(K-1)' and tK', the battery is charged at a constant voltage of Um, and the corresponding charge current in this period drops from Im to Im'. A similar charging process is performed in a period between time t5' and t(i-1)', and in a period between time t(i+1)' and t(K-2)', which is omitted from the drawing and not shown.

It needs to be noted that tK and t1' are the same time. At each of the K charging sub-stages of the first stage, the battery is charged at a constant charge voltage, U1 ≤ U2 ≤...≤ Uc1, and I1 ≥ I2 ≥...≥ Ic1. At each of the K charging sub-stages of the second stage, the battery is charged at a constant charge current and a constant charge voltage alternately, Uc1 ≤ U1' ≤ U2' ≤...≤ Um, and Ic1 ≥ I1' ≥ I2' ≥...≥ Im'.

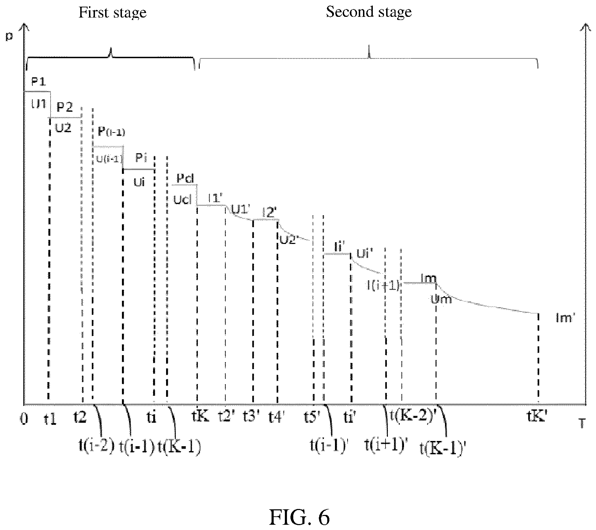

Referring to FIG. 6, at the first stage, the battery is charged in the first charging manner, the first charging manner includes K sequential charging sub-stages, and the K charging sub-stages are defined as an i^{th} charging sub-stage, where i = 1, 2,..., K, respectively; and, at the i^{th} charging sub-stage, the battery is charged at the i^{th} power. At the second stage, the battery is charged in the first charging manner, the first charging manner includes K sequential charging sub-stages, and the K charging sub-stages are defined as the i^{th} charging sub-stage, where i = 1, 2,..., K, respectively; at the i^{th} charging sub-stage, the battery is charged at the i^{th} current; at the (i+1)^{th} charging sub-stage, the battery is charged at an i^{th} voltage, and the charging process goes on alternately and cyclically in this way.

At the first stage, in a period between time 0 and t1, the battery is charged at a constant power of P1 until the voltage reaches U1; in a period between time t1 and t2, the battery is charged at a constant power of P2 until the voltage reaches U2; in a period between time t(i-2) and t(i-1), the battery is charged at a constant power of P(i-1) until the voltage reaches U(i-1); in a period between time t(i-1) to ti, the battery is charged at a constant power of Pi until the voltage reaches Ui; and, in a period between time t(K-1) and tK, the battery is charged at a constant power of Pc1 until the voltage reaches Uc1. A similar charging process is performed in a period between time t2 and t(i-2), and in a period between time ti and t(K-1), which is omitted from the drawing and not shown.

At the second stage, in a period between time t1' and t2', the battery is charged at a constant current of I1' until the voltage reaches U1'; in a period between time t2' and t3', the battery is charged at a constant voltage of U1', and the corresponding charge current in this period drops from I1' to I2'; in a period between time t3' and t4', the battery is charged at a constant current of I2' until the voltage reaches U2'; in a period between time t4' and t5', the battery is charged at a constant voltage of U2'; in a period between time t(i-1)' and ti', the battery is charged at a constant current of Ii' until the voltage reaches Ui'; in a period between time ti' and t(i+1)', the battery is charged at a constant voltage of Ui', and the corresponding charge current in this period drops from I1' to I(i+1)'; in a period between time t(K-2)' and t(K-1)', the battery is charged at a constant current of Im until the voltage reaches Um; and, in a period between time t(K-1)' and tK', the battery is charged at a constant voltage of Um, and the corresponding charge current in this period drops from Im to Im'. A similar charging process is performed in a period between time t5' and t(i-1)', and in a period between time t(i+1)' and t(K-2)', which is omitted from the drawing and not shown.

It needs to be noted that, at each of the K charging sub-stages of the first stage, the battery is charged at a constant power, P1 ≥ P2 ≥...≥ Pc1, and U1 ≤ U2 ≤...≤ Uc1. At each of the K charging sub-stages of the second stage, the battery is charged at a constant charge current and a constant charge voltage alternately, Uc1 ≤ U1' ≤ U2' ≤...≤ Um, and Ic1 ≥ I1' ≥ I2' ≥...≥ Im'.

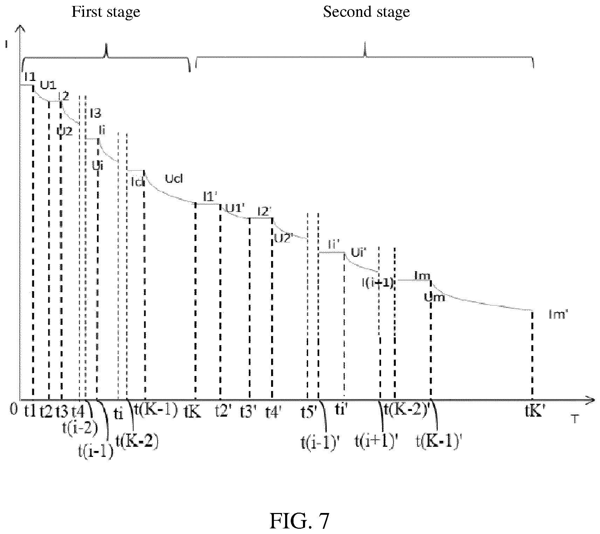

Referring to FIG. 7, at the first stage, the battery is charged in the first charging manner, the first charging manner includes K sequential charging sub-stages, and the K charging sub-stages are defined as the i^{th} charging sub-stage, where i = 1, 2,..., K, respectively; at the i^{th} charging sub-stage, the battery is charged at the i^{th} current; at the (i+1)^{th} charging sub-stage, the battery is charged at the i^{th} voltage, and the charging process goes on alternately and cyclically in this way. At the second stage, the battery is charged in the first charging manner, the first charging manner includes K sequential charging sub-stages, and the K charging sub-stages are defined as the i^{th} charging sub-stage, where i = 1, 2,..., K, respectively; at the i^{th} charging sub-stage, the battery is charged at the i^{th} current; at the (i+1)^{th} charging sub-stage, the battery is charged at an i^{th} voltage, and the charging process goes on alternately and cyclically in this way.

At the first stage, in a period between time 0 and t1, the battery is charged at a constant current of I1 until the voltage reaches U1; in a period between time t1 and t2, the battery is charged at a constant voltage of U1, and the corresponding charge current in this period drops from I1 to I2; in a period between time t2 and t3, the battery is charged at a constant current of I2 until the voltage reaches U2; in a period between time t3 and t4, the battery is charged at a constant voltage of U2, and the corresponding charge current in this period drops from I2 to I3; in a period between time t(i-2) and t(i-1), the battery is charged at a constant current of Ii until the voltage reaches Ui; in a period between time t(i-1) and ti, the battery is charged at a constant voltage of Ui; in a period between time t(K-2) and t(K-1), the battery is charged at a constant current of Ic1 until the voltage reaches Uc1; and, in a period between time t(K-1) and tK, the battery is charged at a constant voltage of Uc1, and the corresponding charge current in this period drops from Ic1 to I1'. A similar charging process is performed in a period between time t4 and t(i-2), and in a period between time ti and t(K-2), which is omitted from the drawing and not shown.

At the second stage, in a period between time t1' and t2', the battery is charged at a constant current of I1' until the voltage reaches U1'; in a period between time t2' and t3', the battery is charged at a constant voltage of U1', and the corresponding charge current in this period drops from I1' to I2'; in a period between time t3' and t4', the battery is charged at a constant current of I2' until the voltage reaches U2'; in a period between time t4' and t5', the battery is charged at a constant voltage of U2'; in a period between time t(i-1)' and ti', the battery is charged at a constant current of Ii' until the voltage reaches Ui'; in a period between time ti' and t(i+1)', the battery is charged at a constant voltage of Ui', and the corresponding charge current in this period drops from I1' to I(i+1)'; in a period between time t(K-2)' and t(K-1)', the battery is charged at a constant current of Im until the voltage reaches Um; and, in a period between time t(K-1)' and tK', the battery is charged at a constant voltage of Um, and the corresponding charge current in this period drops from Im to Im'. A similar charging process is performed in a period between time t5' and t(i-1)', and in a period between time t(i+1)' and t(K-2)', which is omitted from the drawing and not shown.

It needs to be noted that, at each of the K charging sub-stages of the first stage, the battery is charged at a constant charge current and a constant charge voltage alternately, I1 ≥ I2 ≥...≥ Ic1, and U1 ≤ U2 ≤...≤ Uc1. At each of the K charging sub-stages of the second stage, the battery is also charged at a constant charge current and a constant charge voltage alternately, I1' ≥ I2' ≥...≥ Im', U1' ≤ U2' ≤...≤ Um, Ic1 ≥ I1', and Uc1 ≤ U1'.

When the battery is charged in the second charging manner, the first stage includes D sequential charging sub-stages, D is a positive integer, the D charging sub-stages are defined as an j^{th} charging sub-stage, where j = 1, 2,..., D, respectively, and each j^{th} charging sub-stage includes a j^{th} earlier charging sub-stage and a j^{th} later charging sub-stage. The second stage also includes D sequential charging sub-stages, D is a positive integer, the D charging sub-stages are defined as an j^{th} charging sub-stage, where j = 1, 2,..., D, respectively, and each j^{th} charging sub-stage includes a j^{th} earlier charging sub-stage and a j^{th} later charging sub-stage. It needs to be noted that the number D of charging sub-stages in the first stage may be the same as or different from the number D in the second stage.

At one of the j^{th} earlier charging sub-stage or the j^{th} later charging sub-stage, the battery is not charged or is charged or discharged at a j^{th} earlier charge sub-current for a duration of Tj1. At the other of the j^{th} earlier charging sub-stage or the j^{th} later charging sub-stage, the battery is charged at a j^{th} later charge sub-current for a duration of Tj2. An absolute value of the j^{th} earlier charge sub-current is less than an absolute value of the j^{th} later charge sub-current.

In other words, at each j^{th} charging sub-stage, the battery is charged by means of pulse charge or pulse charge-and-discharge, and an average of the charge current at the (j+1)^{th} charging sub-stage is less than or equal to the charge current at the j^{th} charging sub-stage. For example, (the 1^{st} earlier charging sub-current × T11 + the 1^{st} later charging sub-current × T12)/(T11 + T12) is greater than or equal to (the 2^{nd} earlier charging sub-current × T21 + 2^{nd} later charging sub-current × T22)/(T21 + T22), (the 2^{nd} earlier charging sub-current × T21 + the 2^{nd} later charging sub-current × T22)/(T21+T22) is greater than or equal to (the 3^{rd} earlier charging sub-current × T31 + the 3^{rd} later charging sub-current × T32)/(T31 + T32), and so on. Each sum of a Tj 1 duration and a Tj2 duration is a charging period or a discharging period of pulse charge or pulse charge-and-discharge at the j^{th} charging sub-stage.

In addition, it needs to be noted that: in this embodiment, at the j^{th} earlier charging sub-stage, the battery is charged or discharged at the j^{th} earlier charging sub-current for a duration of Tj1, and, at the j^{th} later charging sub-stage, the battery is charged at the j^{th} later charging sub-current for a duration of Tj2. In other embodiments, instead, at the j^{th} earlier charging sub-stage, the battery may be charged at the j^{th} later charging sub-current for a duration of Tj2, and, at the j^{th} later charging sub-stage, the battery may be charged or discharged at the j^{th} earlier charging sub-current for a duration of Tj1. In other embodiments, instead, at the j^{th} earlier charging sub-stage, the battery may be not charged or may stand statically (during which the charge current is 0) for a duration of Tj1, and, at the j^{th} later charging sub-stage, the battery may be charged or discharged at the j^{th} later sub-current for a duration of Tj2.

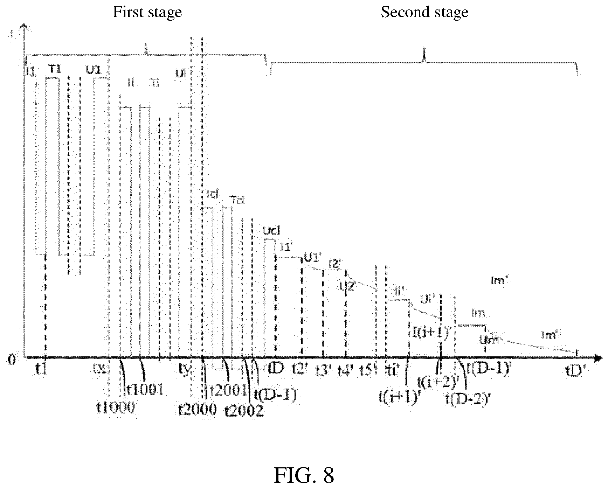

Referring to FIG. 8, in a period between time t1 and t1000, that is, in each charging sub-stage from the 1^{st} charging sub-stage to the 1000^{th} charging sub-stage of the first stage, the battery is first charged at a current of I2, and then charged at a current of I3. A similar charging process is performed in a period between time tx and t1000, which is omitted from the drawing and not shown.

In a period between time t1000 and t2000, that is, in each charging sub-stage from the 1001^{st} to the 2000^{th} charging sub-stage of the first stage, the battery is first charged at a current of I10011, and then left to stand (that is, neither charged nor discharged). A similar charging process is performed in a period between time ty and t2000, which is omitted from the drawing and not shown. In a period between time t2000 and tD, that is, in each charging sub-stage from the 2001^{st} charging sub-stage to the D^{th} charging sub-stage of the first stage, the battery is first charged at a current of I20011, and then discharged at a current of I20012 until the voltage of the battery is equal to the voltage Uc1 (that is, the cut-off voltage). A similar charging process is performed in a period between time t2002 and t(D-1), which is omitted from the drawing and not shown.

In other words, in the D charging sub-stages of the first stage, the battery is charged in three different manners of pulse charge or pulse charge-and-discharge. In addition, it needs to be noted that: the charging period or the charge-and-discharge period of pulse charge or pulse charge-and-discharge is the same at each of the D charging sub-stages, that is, t1 = (t1001 - t1000) = (t2001 - t2000). In other embodiments, instead, the charging period or charge-and-discharge period of pulse charge or pulse charge-and-discharge may vary between different charging sub-stages.

At the second stage, in a period between time t1' and t2', the battery is charged at a constant current of I1' until the voltage reaches U1'; in a period between time t2' and t3', the battery is charged at a constant voltage of U1', and the corresponding charge current in this period drops from I1' to I2'; in a period between time t3' and t4', the battery is charged at a constant current of I2' until the voltage reaches U2'; in a period between time t4' and t5', the battery is charged at a constant voltage of U2'; in a period between time ti' and t(i+1)', the battery is charged at a constant current of Ii' until the voltage reaches Ui'; in a period between time t(i+1)' and t(i+2)', the battery is charged at a constant voltage of Ui', and the corresponding charge current in this period drops from I1' to I(i+1)'; in a period between time t(D-2)' and t(D-1)', the battery is charged at a constant current of Im until the voltage reaches Um; and, in a period between time t(D-1)' and tD', the battery is charged at a constant voltage of Um, and the corresponding charge current in this period drops from Im to Im'. A similar charging process is performed in a period between time t5' and ti', and in a period between time t(i+2)' and t(D-2)', which is omitted from the drawing and not shown.

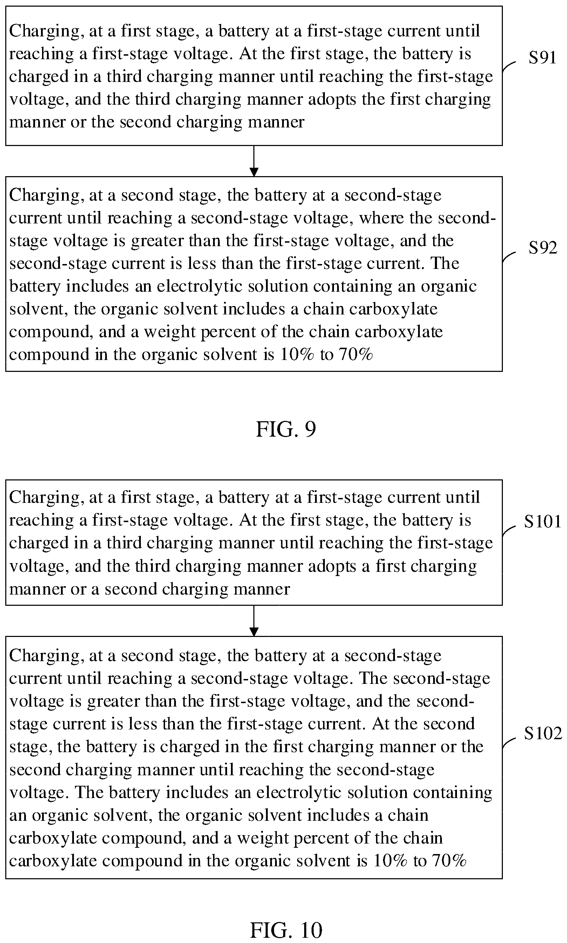

Referring to FIG. 9, FIG. 9 is a second specific embodiment of the method for enhancing battery cycle performance shown in FIG. 2. The second specific embodiment is similar to the first specific embodiment, and the second specific embodiment also includes step S91 and step S92. The difference lies in step S91, as detailed below:

S91: Charging, at a first stage, the battery at a first-stage current until reaching a first-stage voltage. At the first stage, the battery is charged in a third charging manner until reaching the first-stage voltage, and the third charging manner adopts the first charging manner or the second charging manner.

In this embodiment, the first charging manner and the second charging manner are the same as the first charging manner and the second charging manner described in the first specific embodiment, and are not repeated herein.

When the third charging manner adopts the first charging manner, the number K of charging sub-stages may be identical between the two manners. To be specific, the number of charging sub-stages included in the first charging manner adopted at the first stage may be the same as the number of charging sub-stages included in the first charging manner adopted at the second stage. Alternatively, when the third charging manner adopts the second charging manner, the number D of charging sub-stages may be identical between the two manners. To be specific, the number of charging sub-stages included in the second charging manner adopted at the first stage may be the same as the number of charging sub-stages included in the second charging manner adopted at the second stage.

When the third charging manner adopts the first charging manner, the number K of charging sub-stages may be different between the two manners. To be specific, the number of charging sub-stages included in the first charging manner adopted at the first stage may be different from the number of charging sub-stages included in the first charging manner adopted at the second stage. Alternatively, when the third charging manner adopts the second charging manner, the number D of charging sub-stages may be different between the two manners. To be specific, the number of charging sub-stages included in the second charging manner adopted at the first stage may be different from the number of charging sub-stages included in the second charging manner adopted at the second stage.

Referring to FIG. 10, FIG. 10 is a third specific embodiment of the method for enhancing battery cycle performance shown in FIG. 2. The third specific embodiment is similar to the first specific embodiment, and the third specific embodiment also includes step S101 and step S102. The difference lies in step S101 and step S102, as detailed below:
Step S101: Charging, at a first stage, the battery at a first-stage current until reaching a first-stage voltage. At the first stage, the battery is charged in a third charging manner until reaching the first-stage voltage, and the third charging manner adopts a first charging manner or a second charging manner.

In this embodiment, the first charging manner and the second charging manner are the same as the first charging manner and the second charging manner described in the first specific embodiment, and are not repeated herein.

Step S102: Charging, at a second stage, the battery at a second-stage current until reaching a second-stage voltage. The second-stage voltage is greater than the first-stage voltage, and the second-stage current is less than the first-stage current. At the second stage, the battery is charged in the first charging manner or the second charging manner until reaching the second-stage voltage.

The battery includes an electrolytic solution containing an organic solvent, the organic solvent includes a chain carboxylate compound, and a weight percent of the chain carboxylate compound in the organic solvent is 10% to 70%.

In this embodiment, the second-stage current is a constant current, and specifically, a constant current at which the battery is charged at the start of an existing charging process. Alternatively, the second-stage current may be a varying current. For example, at the second stage, the battery is charged at a constant voltage, and therefore, the charge current corresponding to the constant voltage (that is, the second-stage current) is variable as long as the battery can be charged to reach the second-stage voltage by using the second-stage current.

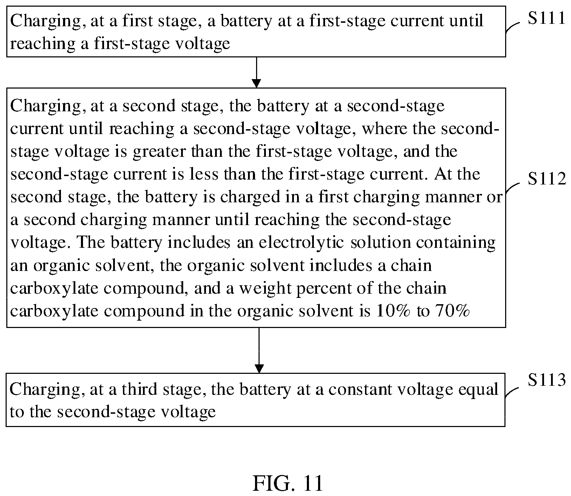

Referring to FIG. 11, FIG. 11 is a fourth specific embodiment of the method for enhancing battery cycle performance shown in FIG. 2. The fourth specific embodiment is similar to the first specific embodiment, and the fourth specific embodiment also includes step S111 and step S112. The difference is that the fourth specific embodiment further includes step S113, as detailed below:
Step 113: Charging, at a third stage, the battery at a constant voltage equal to the second-stage voltage.

In this embodiment, at the third stage, the battery is charged at a constant voltage equal to the second-stage voltage until the battery is fully charged.

In other embodiments, the second specific embodiment may be improved with reference to the fourth embodiment by adding step S 113: Charging, at a third stage, the battery at a constant voltage equal to the second-stage voltage.

In other embodiments, if the second-stage current at the second stage in the third specific embodiment is a constant current, the third specific embodiment may be improved with reference to the fourth embodiment by adding step S113: Charging, at a third stage, the battery at a constant voltage equal to the second-stage voltage.

In summary, this application provides a new combination solution for optimizing a battery cell system. For example, an electrolytic solution with a solvent containing a high weight percent of carboxylate is applied in combination with a high-adhesion separator. On the one hand, the side reaction of gas production at the interface between the carboxylate and the positive or negative electrode can be suppressed by the high-adhesion separator, thereby effectively enhancing the high-temperature cycle performance of the battery and the high-temperature storage performance of the battery. On the other hand, the electrolytic solution containing the carboxylate solvent is characterized by a low viscosity and a high conductivity. Such characteristics alleviate the difficulty of the electrolytic solution in infiltrating the high-adhesion separator and the low speed of the high-adhesion separator in transmitting the electrolytic solution, enhance the kinetics of the battery cell system, and improve the low-temperature cycle performance of the battery.

In addition, the method for enhancing battery cycle performance according to this application is actually to charge an optimized battery cell system in a new charging manner. The new charging manner is: charging, at a first stage, an adjusted battery at a constant current, a constant voltage, or a constant power, or at least one thereof until the voltage reaches the first-stage voltage; and, at a second stage, charging the adjusted battery at a constant current, a constant voltage, or a constant power, or at least one thereof. Alternatively, a charging manner of pulse charge or pulse charge-and-discharge may be adopted at the first stage and the second stage. Therefore, the time taken to charge the battery to a fully charged state can be significantly shortened. In addition, by shortening the time during which the positive electrode stays at a high potential, this application can reduce the time during which the positive electrode at a high voltage reacts parasitically with the electrolytic solution, and further enhance the cycle performance of the battery.

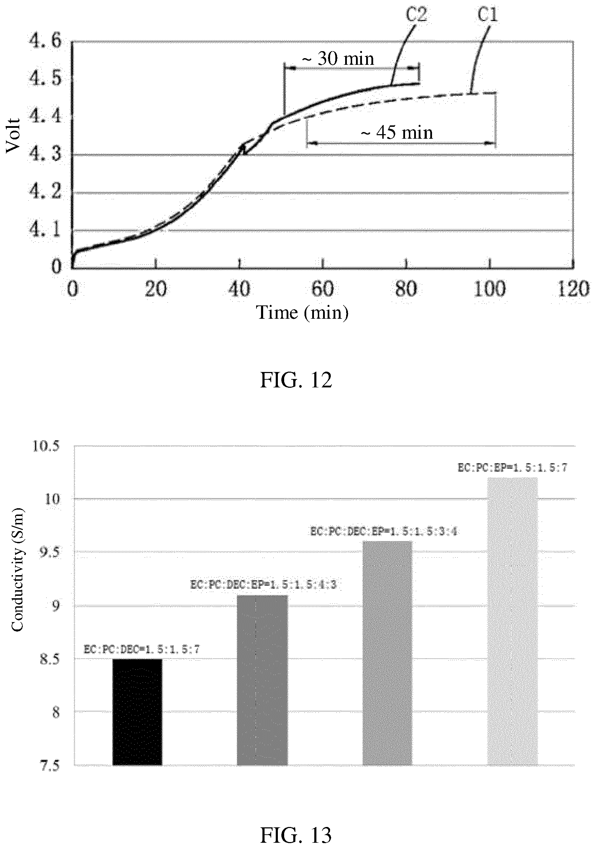

FIG. 12 shows changes of a potential versus Li/Li⁺ of a positive electrode of a battery charged in a conventional charging manner in comparison with a new charging manner 1 disclosed herein. In the drawing, the curve C1 represents the conventional charging manner, and the curve C2 represents the new charging manner 1. In the conventional charging manner, the time during which the potential versus Li/Li⁺ of the positive electrode is higher than 4.4 V is 45 minutes. In the new charging manner 1, the time during which the potential versus Li/Li⁺ of the positive electrode is higher than 4.4 V is 31 minutes. The time during which the potential versus Li/Li⁺ of the positive electrode of the battery stays at a high level is shortened noticeably. Therefore, the new charging manner 1 can reduce the probability of side reactions occurring when the positive electrode of the battery is at a high potential, and can increase the service life of the battery.

In addition, Table 1 below shows comparison between the conventional charging manner and a plurality of new charging manner to compare the time during which the potential versus Li/Li⁺ of the positive electrode is higher than 4.4 V

**Table 1 Comparison between different charging manners with respect to the time in which the positive electrode potential (vs. Li/Li⁺) is above 4.4 V**

| Charging manner | Time in which positive electrode potential (vs. Li/Li⁺) is above 4.4 V |
|---|---|
| Conventional charging manner | 45 min |
| New charging manner 1 | 31 min |
| New charging manner 2 | 27 min |
| New charging manner 3 | 24 min |
| New charging manner 4 | 23 min |
| New charging manner 5 | 23 min |

It needs to be noted that a specific charging process of the conventional charging manner is: charging a battery at a constant current of 0.7 C until the voltage of the battery reaches 4.45 V; and then charging the battery at a constant voltage of 4.45 V until the current of the battery reaches 0.05 C.

A specific charging process of the new charging manner 1 according to this application is: charging a battery at a constant current of 0.7 C until the voltage of the battery reaches 4.45 V; charging the battery at a constant current of 0.5 C until the voltage of the battery reaches 4.5 V; and then charging the battery at a constant voltage of 4.5 V until the current of the battery reaches 0.18 C. A cut-off voltage (4.5 V) of the constant-current charging process in the new charging manner 1 is higher than a cut-off voltage (4.45 V) of the constant-current charging process in the conventional charging manner. In the new charging manner 1, the time during which the potential versus Li/Li⁺ of the positive electrode is higher than 4.4 V is 31 minutes, which is somewhat shorter than that in the conventional charging manner.

A specific charging process of the new charging manner 2 according to this application is: charging a battery at a constant current of 1.2 C until the voltage of the battery reaches 4.25 V; charging the battery at a constant current of 0.7 C until the voltage of the battery reaches 4.45 V; charging the battery at a constant current of 0.5 C until the voltage of the battery reaches 4.5 V; and then charging the battery at a constant voltage of 4.5 V until the current of the battery reaches 0.19 C. The new charging manner 2 includes three constant-current charging processes, and finally, the cut-off voltage (4.5 V) of the constant-current charging process is higher than the cut-off voltage (4.45 V) of the constant-current charging process in the conventional charging manner. In the new charging manner 2, the time during which the potential versus Li/Li⁺ of the positive electrode is higher than 4.4 V is 27 minutes, which is noticeably shorter than that in the conventional charging manner. The time is also shorter than that in the new charging manner 1.

A specific charging process of the new charging manner 3 according to this application is: charging a battery at a constant current of 0.7 C until the voltage of the battery reaches 4.55 V; charging the battery at a constant voltage of 4.4 V until the current of the battery reaches 0.4 C; and then charging the battery at a constant voltage of 4.5 V until the current of the battery reaches 0.13 C. The cut-off voltage (4.55 V) of the constant-current charging process in the new charging manner 3 is higher than the cut-off voltage (4.45 V) of the constant-current charging process in the conventional charging manner. In the new charging manner 3, the time during which the potential versus Li/Li⁺ of the positive electrode is higher than 4.4 V is 24 minutes, which is almost just a half of the time in the conventional charging manner and is also shorter than that in the new charging manner 2 and the new charging manner 1.

A specific charging process of the new charging manner 4 according to this application is: charging a battery at a constant current of 0.7 C until the voltage of the battery reaches 4.45 V; charging the battery at a constant power of 7 W until the voltage of the battery reaches 4.5 V; and then charging the battery at a constant power of 5.5 W until the voltage of the battery reaches 4.55 V The cut-off voltage (4.55 V) of the constant-current charging process in the new charging manner FFC 4 is higher than the cut-off voltage (4.45 V) of the constant-current charging process in the conventional charging manner. In the new charging manner 4, the time during which the potential versus Li/Li⁺ of the positive electrode is higher than 4.4 V is 23 minutes, which is almost just a half of the time in the conventional charging manner and is also shorter than that in the new charging manner 3, the new charging manner 2, and the new charging manner 1.

A specific charging process of the new charging manner 5 according to this application is: charging a battery at a constant current of 0.7 C until the voltage of the battery reaches 4.45 V; leaving the battery to stand for 2.9 seconds; charging the battery at a constant current of 0.7 C for 7.1 seconds, and determining whether the voltage of the battery is greater than or equal to 4.5 V, and, when the voltage of the battery is greater than or equal to 4.5 V, proceeding to a next step; discharging the battery at a constant current of 0.05 C for 1 second; charging the battery at a constant current of 0.41 C for 9 seconds, determining whether the voltage of the battery is greater than or equal to 4.55 V, and, when the voltage of the battery is greater than or equal to 4.55 V, stopping the charging process. The cut-off voltage (4.55 V) of the constant-current charging process in the new charging manner 5 is higher than the cut-off voltage (4.45 V) of the constant-current charging process in the conventional charging manner. In the new charging manner 5, the time during which the potential versus Li/Li⁺ of the positive electrode is higher than 4.4 V is 23 minutes, which is almost just a half of the time in the conventional charging manner and is also shorter than that in the new charging manner 3, the new charging manner 2, and the new charging manner 1 according to this application.

In addition, as can be clearly seen from the comparison chart of the conductivity of the electrolytic solutions with a solvent containing different weight percentages of carboxylate (using ethyl propionate (EP) as an example of the carboxylate compound) shown in FIG. 13, the conductivity of the electrolytic solution increases with the increase of the weight percent of the carboxylate.

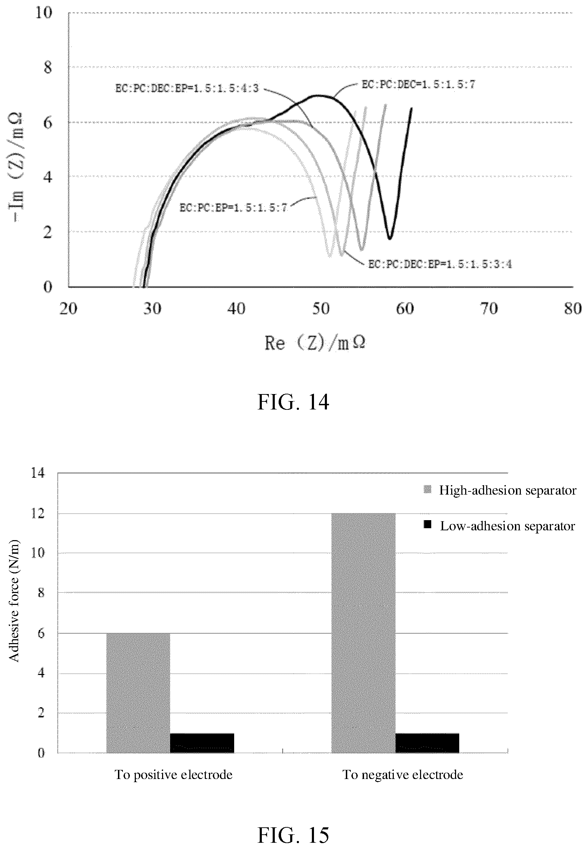

Correspondingly, as can be seen from the full-battery impedance diagram shown in FIG. 14, the full-battery impedance decreases with the increase of the weight percent of the carboxylate, thereby improving the capability of charging the full battery at a high rate and meeting the market demand for fast charging. However, the electrolytic solution containing a high weight percent of carboxylate is prone to react parasitically with the positive or negative electrode material in a high-temperature environment due to a high conductivity and active kinetics, thereby resulting in by-products generated by the consumed electrolytic solution and lithium ions.

Refer to FIG. 15, which is a schematic diagram of adhesive force comparison between different separators. As can be seen, the adhesive force of the high-adhesion separator to the negative electrode is higher than that of a low-adhesion separator by approximately 11 N/m, and the adhesive force of the high-adhesion separator to the positive electrode is higher than that of the low-adhesion separator by approximately 5 N/m. The high-adhesion separator in use can effectively shorten the distance between the electrode plate and the separator in the lithium-ion battery. In addition, the electrolytic solution at the interface is crowded out to some extent, thereby suppressing a growth speed of by-products in a high-temperature environment, enhancing the high-temperature cycle capacity retention rate, and reducing the high-temperature storage expansion rate of the battery cell. It needs to be noted that the low-adhesion separator is a separator that exerts an adhesive force of less than 3 N/m on the positive electrode plate or negative electrode plate. In this embodiment, the adhesive force of the low-adhesion separator is approximately 1 N/m.

In this application, the high-adhesion separator, the new charging manner, and the electrolytic solution system with a solvent containing a high weight percent of carboxylate complement each other. The high-adhesion separator improves the interface between the separator and the positive or negative electrode. The new charging manner shortens the duration of charging the battery to a fully charged state at high voltage, and suppresses production of side reactions, thereby enhancing high-temperature cycle performance of the full battery filled with an electrolytic solution with a solvent containing a high weight percent of carboxylate. The electrolytic solution that contains the carboxylate solvent improves the kinetics of the system, enhances the effect of the electrolytic solution in infiltrating the separator, accelerates the transmission speed of the electrolytic solution, meets the requirements on electrolyte channels of the battery cycled under low-temperature conditions, and enhances the low-temperature cycle performance. The high-adhesion separator and the electrolytic solution that contains a carboxylate solvent complement each other, and work together with the advantageous new charging manner to enhance the high- and low-temperature cycle performance and high-temperature storage performance of the battery.

To make the objectives, technical solutions, and technical effects of this application clearer, the following describes this application in further detail with reference to drawings and embodiments. Understandably, the embodiments described in this specification are merely intended to interpret this application but not to limit this application. This application is not limited to the embodiments enumerated in the specification.

The battery system adopted in the comparative embodiments and the embodiments adopts a general manufacturing process of lithium-ion batteries, in which a positive active material and a negative active material each are mixed with a binder, a solvent, and the like, and stirred to form a homogeneous slurry. The slurry is coated on an aluminum foil and a copper foil separately. Steps such as cold pressing and slitting are performed to obtain electrode plates of the required length and width. The electrode plates are wound together with the separator to form an electrode assembly. The electrode assembly is subjected to packaging, electrolyte injection, and chemical formation to form a finished battery cell. The battery cells of such a system are subjected to low- and high-temperature cycle performance tests and a high-temperature storage test by combining the following three factors: electrolytic solutions containing different weight percentages of carboxylate, separators with different adhesive forces, and different charging manners. For specific solutions, refer to Table 2. The battery cells are compared to each other with respect to the capacity retention rate of the battery cells that have undergone 500 cycles of charge and discharge at 12 °C and 45 °C respectively, and the expansion rate of the battery cells that have been stored at an ambient temperature of 80 °C for 8 hours.

### Comparative Embodiment

Electrolytic solution: The electrolytic solution contains ethylene carbonate (EC), propylene carbonate (PC), diethyl carbonate (DEC), but without carboxylate.

Separator: A low-adhesion separator (with an adhesive force of approximately 1 N/m) is adopted. The substrate of the low-adhesion separator is polyethylene. The polymer adhesive layer is polyvinylidene difluoride (PVDF). The particle size of the polymer is 100 nm. The fraction of coverage of the polymer adhesive layer is 23%.

Charging manner: A conventional charging manner is adopted, and the specific process of the charging manner is as follows:
Under an ambient temperature of 12 °C/45 °C:
Step 1: Charging a battery at a constant current of 0.7 C until the voltage of the battery reaches 4.45 V;
Step 2: Charging the battery at a constant voltage of 4.45 V until the current of the battery reaches 0.05 C;
Step 3: Leaving the battery to stand for 5 minutes;
Step 4: Discharging the battery at a constant current of 0.5 C until the voltage of the battery reaches 3.0 V;
Step 5: Leaving the battery to stand for 5 minutes; and
Step 6: Repeating steps 1 to 5 to complete 500 cycles.

### Embodiment 1

Electrolytic solution: The electrolytic solution contains the same ingredients as those in the comparative embodiment.

Separator: The separator is identical to that in the comparative embodiment.

Charging manner: The new charging manner 1 according to this application is adopted, and the specific process of the charging manner is as follows:
Under an ambient temperature of 12 °C/45 °C:
Step 1: Charging a battery at a constant current of 0.7 C until the voltage of the battery reaches 4.45 V;
Step 2: Charging the battery at a constant current of 0.5 C until the voltage of the battery reaches 4.5 V;
Step 3: Charging the battery at a constant voltage of 4.5 V until the current of the battery reaches 0.18 C;
Step 4: Leaving the battery to stand for 5 minutes;
Step 5: Discharging the battery at a constant current of 0.5 C until the voltage of the battery reaches 3.0 V;
Step 6: Leaving the battery to stand for 5 minutes; and
Step 7: Repeating steps 1 to 6 to complete 500 cycles.

### Embodiment 2

Electrolytic solution: The electrolytic solution contains the same ingredients as those in the comparative embodiment.

Separator: A high-adhesion separator (with an adhesive force of approximately 12 N/m) is adopted. The substrate of the high-adhesion separator is polyethylene. The polymer adhesive layer is polyacrylic acid. The particle size of the polymer is 500 nm. The fraction of coverage of the polymer adhesive layer is 40%.

Charging manner: The conventional charging manner, that is, a constant-current plus constant-voltage charging manner, is adopted. For the specific process, refer to the comparative embodiment, details of which are omitted here.

### Embodiment 3

Electrolytic solution: The electrolytic solution contains the same ingredients as those in the comparative embodiment except that 40 wt% carboxylate is added.

Separator: The separator is identical to that in the comparative embodiment.

Charging manner: The conventional charging manner, that is, a constant-current plus constant-voltage charging manner, is adopted. For the specific process, refer to the comparative embodiment, details of which are omitted here.

### Embodiment 4

Electrolytic solution: The electrolytic solution contains the same ingredients as those in the comparative embodiment except that 6 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 5

Electrolytic solution: The electrolytic solution contains the same ingredients as those in the comparative embodiment except that 10 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 6

Electrolytic solution: The electrolytic solution contains the same ingredients as those in the comparative embodiment except that 20 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 7

Electrolytic solution: The electrolytic solution contains the same ingredients as those in the comparative embodiment except that 30 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 8

Electrolytic solution: The electrolytic solution contains the same ingredients as those in the comparative embodiment except that 40 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 9

Electrolytic solution: The electrolytic solution contains the same ingredients as those in the comparative embodiment except that 50 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 10

Electrolytic solution: The electrolytic solution contains the same ingredients as those in the comparative embodiment except that 60 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 11

Electrolytic solution: The electrolytic solution contains the same ingredients as those in the comparative embodiment except that 70 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 12

Electrolytic solution: The electrolytic solution contains the same ingredients as those in the comparative embodiment except that 74 wt% carboxylate is added.

Separator: The separator is identical to that in Embodiment 2.

Charging manner: The new charging manner 1 according to this application is adopted. For the specific process, refer to Embodiment 1, details of which are omitted here.

### Embodiment 13

Electrolytic solution: The electrolytic solution contains the same ingredients as those in the comparative embodiment except that 40 wt% carboxylate is added.

Separator: The separator is identical to that in the comparative embodiment.

Charging manner: The new charging manner 1 according to this application is adopted. For the specific process, refer to Embodiment 1, details of which are omitted here.

### Embodiment 14

Electrolytic solution: The electrolytic solution contains the same ingredients as those in the comparative embodiment except that 40 wt% carboxylate is added.

Separator: The separator is identical to that in the comparative embodiment.

Charging manner: The conventional charging manner, that is, a constant-current plus constant-voltage charging manner, is adopted. For the specific process, refer to the comparative embodiment, details of which are omitted here.

### Embodiment 15

Electrolytic solution: The electrolytic solution contains the same ingredients as those in the comparative embodiment except that 40 wt% carboxylate is added.

Separator: A high-adhesion separator (with an adhesive force of approximately 3.2 N/m) is adopted. The substrate of the high-adhesion separator is polyethylene. The polymer adhesive layer is polyacrylic acid. The particle size of the polymer is 200 nm. The fraction of coverage of the polymer adhesive layer is 15%.

Charging manner: The new charging manner 1 according to this application is adopted. For the specific process, refer to Embodiment 1, details of which are omitted here.

### Embodiment 16

Electrolytic solution: The electrolytic solution contains the same ingredients as those in the comparative embodiment except that 40 wt% carboxylate is added.

Separator: A high-adhesion separator (with an adhesive force of approximately 20 N/m) is adopted. The substrate of the high-adhesion separator is polyethylene. The polymer adhesive layer is polyacrylic acid. The particle size of the polymer is 500 nm. The fraction of coverage of the polymer adhesive layer is 85%.

Charging manner: The new charging manner 1 according to this application is adopted. For the specific process, refer to Embodiment 1, details of which are omitted here.

### Embodiment 17

Electrolytic solution: The electrolytic solution contains the same ingredients as those in the comparative embodiment except that 40 wt% carboxylate is added.

Separator: The separator is identical to that in Embodiment 2.

Charging manner: The new charging manner 2 according to this application is adopted, and the specific process of the charging manner is as follows:
Under an ambient temperature of 12 °C/45 °C:
Step 1: Charging a battery at a constant current of 1.2 C until the voltage of the battery reaches 4.25 V;
Step 2: Charging a battery at a constant current of 0.7 C until the voltage of the battery reaches 4.45 V;
Step 3: Charging the battery at a constant current of 0.5 C until the voltage of the battery reaches 4.5 V;
Step 4: Charging the battery at a constant voltage of 4.5 V until the current of the battery reaches 0.19 C;
Step 5: Leaving the battery to stand for 5 minutes;
Step 6: Discharging the battery at a constant current of 0.5 C until the voltage of the battery reaches 3.0 V;
Step 7: Leaving the battery to stand for 5 minutes; and
Step 8: Repeating steps 1 to 7 to complete 500 cycles.

### Embodiment 18

Electrolytic solution: The electrolytic solution contains the same ingredients as those in the comparative embodiment except that 40 wt% carboxylate is added.

Separator: The separator is identical to that in Embodiment 2.

Charging manner: The new charging manner 3 according to this application is adopted, and the specific process of the charging manner is as follows:
Under an ambient temperature of 12 °C/45 °C:
Step 1: Charging a battery at a constant current of 0.7 C until the voltage of the battery reaches 4.45 V;
Step 2: Charging the battery at a constant voltage of 4.4 V until the current of the battery reaches 0.4 C;
Step 3: Charging the battery at a constant voltage of 4.5 V until the current of the battery reaches 0.13 C;
Step 4: Leaving the battery to stand for 5 minutes;
Step 5: Discharging the battery at a constant current of 0.5 C until the voltage of the battery reaches 3.0 V;
Step 6: Leaving the battery to stand for 5 minutes; and
Step 7: Repeating steps 1 to 6 to complete 500 cycles.

### Embodiment 19

Electrolytic solution: The electrolytic solution contains the same ingredients as those in the comparative embodiment except that 40 wt% carboxylate is added.

Separator: The separator is identical to that in Embodiment 2.

Charging manner: The new charging manner 4 according to this application is adopted, and the specific process of the charging manner is as follows:
Under an ambient temperature of 12 °C/45 °C:
Step 1: Charging a battery at a constant current of 0.7 C until the voltage of the battery reaches 4.45 V;
Step 2: Charging the battery at a constant power of 7 W until the voltage reaches 4.5 V;
Step 3: Charging the battery at a constant power of 5.5 W until the voltage reaches 4.55 V;
Step 4: Leaving the battery to stand for 5 minutes;
Step 5: Discharging the battery at a constant current of 0.5 C until the voltage reaches 3.0 V;
Step 6: Leaving the battery to stand for 5 minutes; and
Step 7: Repeating steps 1 to 6 to complete 500 cycles.

### Embodiment 20

Electrolytic solution: The electrolytic solution contains the same ingredients as those in the comparative embodiment except that 40 wt% carboxylate is added.

Separator: The separator is identical to that in Embodiment 2.

Charging manner: The new charging manner 5 according to this application is adopted, and the specific process of the charging manner is as follows:
Under an ambient temperature of 12 °C/45 °C:
Step 1: Charging a battery at a constant current of 0.7 C until the voltage of the battery reaches 4.45 V;
Step 2: Leaving the battery to stand for 2.9 seconds;
Step 3: Charging the battery at a constant current of 0.7 C for 7.1 seconds; determining whether the voltage of the battery is greater than or equal to 4.5 V When the voltage of the battery is greater than or equal to 4.5 V, proceeding to step 5;
Step 4: Repeating steps 2 to 3 to complete 100000 cycles;
Step 5: Discharging the battery at a constant current of 0.05 C for 1 second; and
Step 6: Charging the battery at a constant current of 0.41 C for 9 seconds, and determining whether the voltage of the battery is greater than or equal to 4.55 V. When the voltage of the battery is greater than or equal to 4.55 V, proceeding to step 8;
Step 7: Leaving the battery to stand for 5 minutes;
Step 8: Discharging the battery at a constant current of 0.5 C until the voltage reaches 3.0 V;
Step 9: Leaving the battery to stand for 5 minutes; and
Step 10: Repeating steps 1 to 9 to complete 500 cycles.

**Table 2 Test of Low- and high-temperature cycle performance and high-temperature storage performance of batteries in Comparative Embodiment and Embodiments 1 to 20**

| Embodiment! Comparative Embodiment | Ingredients of electrolytic solution | | | | | Adhesive force of separator to negative electrode (N/m) | Charging manner | 500^{th}-cycle capacity retention rate of battery after cycling at 12 °C | 500^{th}-cycle capacity retention rate of battery after cycling at 45 °C | Expansion rate of battery cell after cycling at 80 °C for 8 hours |
|---|---|---|---|---|---|---|---|---|---|---|
| | Solvent | | | | Lithium salt | | | | | |
| | EC | PC | DEC | EP | LiPF₆ | | | | | |
| Comparative Embodiment | 15% | 15% | 70% | 0% | 1 mol/L | 1 | Conventional charging | 82.1% | 82.3% | 13.6% |
| Embodiment 1 | 15% | 15% | 70% | 0% | 1 mol/L | 1 | New charging manner 1 | 82.5% | 85.6% | 13.5% |
| Embodiment 2 | 15% | 15% | 70% | 0% | 1 mol/L | 12 | Conventional charging | 65.2% | 82.1% | 10.2% |
| Embodiment 3 | 15% | 15% | 30% | 40% | 1 mol/L | 1 | Conventional charging | 86.5% | 71.4% | 30.7% |
| Embodiment 4 | 15% | 15% | 64% | 6% | 1 mol/L | 12 | New charging manner 1 | 74.2% | 84.2% | 10.3% |
| Embodiment 5 | 15% | 15% | 60% | 10% | 1 mol/L | 12 | New charging manner 1 | 80.3% | 88.4% | 10.4% |
| Embodiment 6 | 15% | 15% | 50% | 20% | 1 mol/L | 12 | New charging manner 1 | 82.1% | 89.2% | 11.3% |
| Embodiment 7 | 15% | 15% | 40% | 30% | 1 mol/L | 12 | New charging manner 1 | 84.2% | 89.3% | 11.8% |
| Embodiment 8 | 15% | 15% | 30% | 40% | 1 mol/L | 12 | New charging manner 1 | 86.2% | 89.8% | 12.4% |
| Embodiment 9 | 15% | 15% | 20% | 50% | 1 mol/L | 12 | New charging manner 1 | 86.8% | 89.5% | 13.1% |
| Embodiment 10 | 15% | 15% | 10% | 60% | 1 mol/L | 12 | New charging manner 1 | 87.6% | 90.3% | 13.4% |
| Embodiment 11 | 15% | 15% | 0% | 70% | 1 mol/L | 12 | New charging manner 1 | 88.0% | 88.6% | 13.7% |
| Embodiment 12 | 13% | 13% | 0% | 74% | 1 mol/L | 12 | New charging manner 1 | 88.2% | 84.3% | 20.7% |
| Embodiment 13 | 15% | 15% | 30% | 40% | 1 mol/L | 1 | New charging manner 1 | 86.4% | 77.4% | 30.7% |
| Embodiment 14 | 15% | 15% | 30% | 40% | 1 mol/L | 12 | Conventional charging | 86.5% | 78.6% | 12.4% |
| Embodiment 15 | 15% | 15% | 30% | 40% | 1 mol/L | 3.2 | New charging manner 1 | 86.3% | 87.5% | 20.6% |
| Embodiment 16 | 15% | 15% | 30% | 40% | 1 mol/L | 20 | New charging manner 1 | 84.2% | 90.3% | 12.2% |
| Embodiment 17 | 15% | 15% | 30% | 40% | 1 mol/L | 12 | New charging manner 2 | 86.2% | 90.2% | 12.4% |
| Embodiment 18 | 15% | 15% | 30% | 40% | 1 mol/L | 12 | New charging manner 3 | 86.3% | 89.4% | 12.4% |
| Embodiment 19 | 15% | 15% | 30% | 40% | 1 mol/L | 12 | New charging manner 4 | 86.4% | 90.5% | 12.3% |
| Embodiment 20 | 15% | 15% | 30% | 40% | 1 mol/L | 12 | New charging manner 5 | 86.0% | 89.7% | 12.1% |

In the comparative embodiment, the battery cell is manufactured by using an electrolytic solution with a carboxylate-free solvent, a conventional charging manner, and a low-adhesion separator, and is subjected to a high- and low-temperature cycle test and a high-temperature storage test.

In Embodiment 1, the new charging manner 1 according to this application is adopted. The time during which the positive electrode stays at a high voltage in charging cycles can be shortened. The side reactions between the electrolytic solution and the positive electrode are reduced. The high-temperature cycle performance is improved. The low-temperature cycle performance is equivalent to that in the comparative embodiment.

In Embodiment 2, a high-adhesion separator is introduced into the battery system. Because the electrolytic solution contains no carboxylate, the kinetics is inferior. The high-adhesion separator is poorly infiltrated. The low-temperature cycle performance is drastically deteriorated in comparison with the comparative embodiment. In addition, the high-temperature storage performance is slightly improved due to enhanced adhesive force of the high-adhesion separator.

In Embodiment 3, an electrolytic solution with a carboxylate-containing solvent is introduced in the battery system. In comparison with the comparative embodiment, the battery kinetics is improved, and the low-temperature cycle performance is improved to some extent, but the side reactions in a high-temperature environment increase. The high-temperature cycle performance and the high-temperature storage performance deteriorate.

In Embodiment 8, both an electrolytic solution with a carboxylate-containing solvent and a high-adhesion separator are introduced in the battery system, and then the charge-and-discharge test is performed in the new charging manner 1 according to this application. As can be seen from comparison with the comparative embodiment, the high-adhesion separator improves the battery interface, and reduces side reactions at the interface of the battery filled with the electrolytic solution that includes a carboxylate-containing solvent. The electrolytic solution that includes a carboxylate-containing solvent is active in kinetics, improves the effect of infiltrating the high-adhesion separator, and improves the transmission capacity of the electrolytic solution. In addition, the new charging manner 1 according to this application can reduce the duration of charging the battery to a fully charged state at a high voltage, thereby enhancing both the high- and low-temperature cycle performance and the high-temperature storage performance of the battery.

In Embodiments 5 to 11, electrolytic solutions with solvents containing carboxylate added at different weight percentages ranging from 10 wt% to 70 wt% are adopted in the battery system, and work together with the high-adhesion separator and the new charging manner 1 according to this application, so as to jointly enhance the high-temperature cycle performance and high-temperature storage performance of the battery. In addition, with the increase of the weight percent of the carboxylate in the solvent, the low-temperature cycle performance is enhanced more noticeably.

In Embodiment 4 versus Embodiments 5 to 11, the weight percent of the carboxylate in the solvent of the electrolytic solution is less than 10%. The kinetics is insufficient, the low-temperature cycle performance deteriorates and is unable to meet requirements.

In Embodiment 12 versus Embodiments 5 to 11, the weight percent of the carboxylate in the solvent of the electrolytic solution is higher than 70%. The electrolytic solution is of high activity, and side reactions increase at a high temperature. The high-temperature cycle performance and the high-temperature storage performance deteriorate noticeably.

As can be seen from Embodiment 13 versus Embodiment 8, the high-adhesion separator can reinforce the battery interface, reduce side reactions, and enhance the high-temperature cycle performance and high-temperature storage performance noticeably.

As can be seen from Embodiment 14 versus Embodiment 8, the new charging manner 1 enhances the high-temperature cycle performance noticeably in contrast to the conventional charging manner.

As can be further seen from Embodiments 15 and 16 versus Embodiment 8, the adhesive force of the separator exerts an effect in improving the high-temperature cycle performance and the high-temperature storage performance. The greater the adhesive force, the more noticeable the improvement effect.

As can be seen from Embodiments 17, 18, 19, and 20 versus Embodiment 8, the new charging manner is effective in improving the high-temperature cycle performance.

It needs to be noted that, for the capacity retention rate of the battery that has undergone 500 charge-and-discharge cycles at 12 °C and 45 °C respectively, a method for calculating the capacity retention rate shown in Table 2 comes in the following two cases.

In a case that the test temperature is adjusted to 12 °C, the specific charge-and-discharge process is as follows:
Step 1: Charging a battery at a constant current of 0.7 C until the voltage reaches 4.45 V;
Step 2: Charging the battery at a constant voltage of 4.45 V until the current reaches 0.05 C;
Step 3: Leaving the battery to stand for 5 minutes;
Step 4: Discharging the battery at a constant current of 0.5 C until the voltage reaches 3.0V;
Step 5: Leaving the battery to stand for 5 minutes; and
Step 6: Repeating steps 1 to 5 to complete 500 cycles.

In this case, the capacity retention rate of the battery after 500 charge-and-discharge cycles performed at 12 °C is: a ratio of a discharge capacity of the battery after 500 charge-and-discharge cycles to a discharge capacity of the battery after the first charge-and-discharge cycle.

In a case that the test temperature is adjusted to 45 °C, the specific charge-and-discharge process is as follows:
Step 1: Charging a battery at a constant current of 0.7 C until the voltage reaches 4.45 V;
Step 2: Charging the battery at a constant voltage of 4.45 V until the current reaches 0.05 C;
Step 3: Leaving the battery to stand for 5 minutes;
Step 4: Discharging the battery at a constant current of 0.5 C until the voltage reaches 3.0V;
Step 5: Leaving the battery to stand for 5 minutes; and
Step 6: Repeating steps 1 to 5 to complete 500 cycles.

In this case, the capacity retention rate of the battery after 500 charge-and-discharge cycles performed at 45 °C is: a ratio of a discharge capacity of the battery after 500 charge-and-discharge cycles to a discharge capacity of the battery after the first charge-and-discharge cycle.

After the battery is stored at an ambient temperature of 80 °C for 8 hours, the method for testing the expansion rate of the battery cell is as follows:
Step 1: Measuring a thickness, a voltage, and an impedance of a battery cell under an initial voltage;
Step 2: Charging the battery to a fully charged state. Specifically, charging the battery at a constant current of 0.7 C until the voltage reaches 4.45 V, and charging the battery at a constant voltage of 4.45 V until the current reaches 0.02 C;
Step 3: Measuring the thickness, voltage, and impedance of the battery cell in a fully charged state;
Step 4: Storing the battery cell in an 80 °C oven for 8 hours; and
Step 5: Measuring the thickness, voltage, and impedance of the battery cell after the period of storage.

The method for calculating the expansion rate of the battery cell is: (cell thickness after high-temperature storage - cell thickness under initial voltage)/cell thickness under initial voltage. To be specific, a difference between the cell thickness measured in step 5 and the cell thickness measured in step 1 is calculated, and then the difference is divided by the cell thickness measured in step 1.

Therefore, according to this application, a weight ratio between lithium cobalt oxide primary particles and lithium cobalt oxide secondary particles in a positive active material of the battery is adjusted; at the first stage, the adjusted battery is charged at a constant current, a constant voltage, or a constant power, or at least one thereof until the voltage reaches the first-stage voltage; and, at the second stage, the adjusted battery is charged at a constant current, a constant voltage, or a constant power, or at least one thereof. Alternatively, a charging manner of pulse charge or pulse charge-and-discharge may be adopted at the first stage and the second stage. In this way, the cycle performance of the battery can be further enhanced, and the low-temperature discharge performance of the battery during cycles can be improved significantly.

To a person skilled in the art, it is evident that this application is not limited to the details of the exemplary embodiments described above, and this application can be implemented in other specific forms without departing from the spirit or essential features of this application. Therefore, the foregoing embodiments of this application are construed in all respects as exemplary but not restrictive. The scope of this application is defined by the claims appended hereto rather than the foregoing description. Therefore, all changes that fall within the meanings and scope of equivalents of the claims are intended to be incorporated in this application.

## Claims

1. A method for enhancing battery cycle performance, applied in a battery, **characterized in that** the method comprises:
charging, at a first stage, the battery at a first-stage current until reaching a first-stage voltage; and
charging, at a second stage, the battery at a second-stage current until reaching a second-stage voltage, wherein the second-stage voltage is greater than the first-stage voltage, and the second-stage current is less than the first-stage current,
wherein the battery comprises an electrolytic solution containing an organic solvent, the organic solvent comprises a chain carboxylate compound, and a weight percent of the chain carboxylate compound in the organic solvent is 10% to 70%.

2. The method according to claim 1, **characterized in that** the chain carboxylate compound is at least one selected from compounds represented by Formula I: 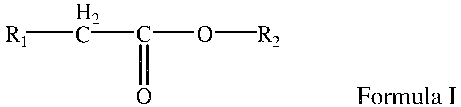 wherein, R₁ is selected from a hydrogen atom, a halogen atom, a hydroxyl, a C₁ to C₂₀ alkyl, a C₁ to C₂₀ alkoxyl, a C₁ to C₂₀ alkenyl, a C₆ to C₃₀ aryl, or a C₆ to C₃₀ aryloxy; and R₂ is selected from a hydrogen atom, a halogen atom, a C₁ to C₂₀ alkyl, a C₁ to C₂₀ alkenyl, or a C₆ to C₃₀ aryl.

3. The method according to claim 2, **characterized in that** the chain carboxylate compound is at least one selected from methyl formate, methyl acetate, ethyl formate, ethyl acetate, propyl acetate, ethyl propionate, methyl propionate, n-propyl propionate, isopropyl propionate, methyl propionate, n-propyl propionate, isopropyl propionate, n-butyl propionate, isobutyl propionate, n-pentyl propionate, isopentyl propionate, ethyl n-butyrate, n-propyl n-butyrate, propyl isobutyrate, n-pentyl n-butyrate, n-pentyl isobutyrate, n-butyl n-butyrate, isobutyl isobutyrate, or n-pentyl n-valerate.

4. The method according to claim 1, **characterized in that** the electrolytic solution further comprises a lithium salt, and the lithium salt is at least one selected from lithium hexafluorophosphate, lithium difluorophosphate, lithium tetrafluoroborate, lithium hexafluoroarsenate, lithium perchlorate, lithium bisfluorosulfonimide, lithium bis(trifluoromethanesulfonyl)imide, lithium bis(oxalato)borate, or lithium difluoro(oxalato)borate.

5. The method according to claim 1, **characterized in that** the battery further comprises a positive electrode plate, a negative electrode plate, and a separator disposed between the positive electrode plate and the negative electrode plate, the separator comprises a porous substrate, a heat-resistant coating disposed on a surface of the porous substrate, and a polymer adhesive layer disposed on an outermost side of the separator, the polymer adhesive layer is disposed on a surface of the heat-resistant coating or on the surface of the porous substrate that is not coated with the heat-resistant coating, the polymer adhesive layer comprises polymer particles, and a number of packing layers of the polymer particles in the polymer adhesive layer does not exceed four.

6. The method according to claim 5, **characterized in that** the polymer particles are at least one of polyvinylidene dichloride, poly(vinylidene fluoride-co-hexafluoropropylene), poly(styrene-co-butadiene), polyacrylonitrile, poly(butadiene-co-acrylonitrile), polyacrylic acid, polyacrylate, or poly(acrylate-co-styrene), or a copolymer of at least two of the foregoing polymer monomers, and a diameter of the polymer particles is 0.2 µm to 2 µm.

7. The method according to claim 5, **characterized in that** a percentage of a coverage area of the polymer adhesive layer on the porous substrate or the heat-resistant coating is 15% to 85%.

8. The method according to claim 5, **characterized in that** an adhesive force between the separator and the positive electrode plate or negative electrode plate is greater than or equal to 3 N/m.

9. The method according to claim 1, **characterized in that**, at the second stage, the battery is charged in a first charging manner or a second charging manner until reaching the second-stage voltage;
the first charging manner comprises K sequential sub-stages, wherein K is an integer greater than or equal to 2, the K sub-stages are defined as an i^{th} sub-stage, wherein i = 1, 2,..., K, respectively; at the i^{th} sub-stage, the battery is charged at an i^{th} current or an i^{th} voltage or an i^{th} power; at an (i+1)^{th} sub-stage, the battery is charged at an (i+1)^{th} current or an (i+1)^{th} voltage or an (i+1)^{th} power; and, a charge current at the (i+1)^{th} sub-stage is less than or equal to the charge current at the i^{th} sub-stage, or the (i+1)^{th} voltage is greater than or equal to the i^{th} voltage, or the (i+1)^{th} power is less than or equal to the i^{th} power; and
the second charging manner comprises D sequential charging sub-stages, wherein D is an integer greater than or equal to 2, the D charging sub-stages are defined as a j^{th} charging sub-stage, wherein j = 1, 2,..., D, respectively, each j^{th} charging sub-stage comprises a j^{th} earlier charging sub-stage and a j^{th} later charging sub-stage; at one of the j^{th} earlier charging sub-stage or the j^{th} later charging sub-stage, the battery is not charged or is charged or discharged at a j^{th} earlier charge sub-current for a duration of Tj 1; at the other of the j^{th} earlier charging sub-stage or the j^{th} later charging sub-stage, the battery is charged at a j^{th} later charge sub-current for a duration of Tj2; and an absolute value of the j^{th} earlier charge sub-current is less than an absolute value of the j^{th} later charge sub-current.

10. The charging method according to claim 9, **characterized in that** an average value of the charge current at the j^{th} charging sub-stage is less than the charge current at the first stage, and an average value of the charge current at the (j+1)^{th} charging sub-stage is less than or equal to the charge current at the j^{th} sub-stage.

11. The method according to claim 9, **characterized in that**, at the first stage, the battery is charged in a third charging manner until reaching the first-stage voltage, and the third charging manner adopts the first charging manner or the second charging manner.

12. The method according to claim 11, **characterized in that**, when the third charging manner adopts the first charging manner, the number K of charging sub-stages is identical between the two manners; or, when the third charging manner adopts the second charging manner, the number D of charging sub-stages is identical between the two manners.

13. The method according to claim 1, **characterized in that** the first-stage voltage is equal to a charge voltage limit of the battery, and the second-stage voltage is less than an oxidative decomposition voltage of the electrolytic solution in the battery.

14. The method according to claim 1, **characterized in that** the second-stage voltage is less than or equal to the first-stage voltage plus 500 millivolts.

15. An electronic device, comprising a battery and a battery management unit, **characterized in that** the battery comprises an electrolytic solution containing an organic solvent, the organic solvent comprises a chain carboxylate compound, a weight percent of the chain carboxylate compound in the organic solvent is 10% to 70%, and the battery management unit is configured to execute the method according to any one of claims 1 to 14.
